# EUROPEAN PATENT SPECIFICATION

(11) **EP 1 713 235 B1**
(45) Date of publication and mention of the grant of the patent: **30.04.2008**
(21) Application number: 06100832.2
(22) Date of filing: 25.01.2006
(51) Int. Cl.: H04L 29/12

(54) **Wireless adaptor and method for transmitting and receiving message**
Drahtloser Adapter und Methode zum Senden und Empfangen von Nachrichten
Adapteur sans fil et méthode pour transmettre et recevoir des messages

(30) Priority: 13.04.2005 CN 200510065703
(43) Date of publication of application: 18.10.2006
(73) Proprietor: Delta Networks, Inc., Neihu, Taipei 114 (TW)
(72) Inventor: LI, Qiang, 114, Neihu, Taipei (TW); CHANG, Spencer, 114, Neihu, Taipei (TW); WANG, Shiwei, 114, Neihu, Taipei (TW)
(74) Representative: Kindermann, Peter

(56) References cited:
- POSTEL J: "rfc 925 - Multi-LAN Address Resolution" IETF RFC, October 1984 (1984-10), XP002218286
- SIDOROVS A ET AL: "SmartARP: merging IP and MAC addressing for low-cost gigabit Ethernet networks" COMPUTER NETWORKS, ELSEVIER SCIENCE PUBLISHERS B.V., AMSTERDAM, NL, vol. 31, no. 21, 10 November 1999 (1999-11-10), pages 2193-2204, XP004304642 ISSN: 1389-1286

## Description

The present invention relates to a wireless adaptor and a method for transmitting and receiving a message, in particular, to a method for transmitting and receiving the message via the wireless adaptor with the function of bridge and repeat in a network having an Internet protocol address.

For Ethernet that we frequently use, since the message thereof is transmitted via broadcasting, all the nodes would receive the frames while only the frame whose destination address is consistent with the hardware address of the node is acceptable. Hence no matter whichever upper-level protocol is adopted at the upper layer, for example Transmission Control Protocol/Internet Protocol (TCP/IP), if only the Ethernet is adopted in the transmission at the lower layer, the hardware address based on the media access control (MAC) is used.

Generally if the network interface is accepted by the system, then the data would be transmitted and received via the hardware network through the network interface by the datalink, and the Internet protocol (IP) address is unnecessary to be used while the frame is transmitted in the hardware network. However, the transmission is based on IP address when the upper-level protocol TCP/IP is adopted. Thus problem arises therefrom that the hardware address or the protocol address is typically adopted in a corresponding layer and thus here needs an efficient solution for a corresponding transformation between the hardware address and the protocol address in the aspect of transmitting a message.

The advantage of address resolution protocol (ARP) is that the corresponding address relationship thereof is dynamical, that is, the relationship between the IP address and the corresponding hardware address is identified by means of query. When a packet is going to be transmitted from a source host to a destination host, if the corresponding transformation between the IP address and the hardware address for destination host is not obtained from the table in the cache therein, a broadcast packet for an ARP request containing the IP address and the hardware address about the source end is transmitted to the Internet to query the hardware address for the destination host. In the moment, every host being connecting with the Internet receives the broadcast packet and then checks whether the IP address containing in the broadcast packet is consistent with the IP address thereof and, if inconsistency, the broadcast packet is neglected, while an ARP reply is sent in response to the source host to inform the source host the hardware address thereof if consistency.

The bridge device is used to link several small-scale local networks to organize a large-scale local network and to filter the passing message. To achieve the above aspect, the bridge device would judge whether the message is passed to another local network. In specific, the bridge device decides whether the message is passed to other local networks merely upon the hardware address, when an ARP message is passing therethrough the bridge device. In this case, it lacks not only the capability to integrate the local networks, so as to reduce the number of transmitting ARP requests and to further enhance the transmission efficiency of the network, but also the capability to conceal the hardware address of the source host and to make the source host in server end transmit messages to the network by individual approach which is time consuming.

Document POSTEL J.: "rfc 925 - Multi-LAN Address Resolution" IETF RFC, October 1984, discloses the use of ARP to establish communication. A BOX being a bridge relays the ARP request into neighboring LANs and relays data to hosts on other LANs. The BOX keeps a table for each LAN it is connected to and collects IA(Internet Address):HA(Hardware Address) address mappings of hosts in the table it keeps for each LAN it is attached to. When the BOX accepts the request of a source host to search for the IA:HA of a destination host, it composes and sends an ARP packet on each of its interfaces. These ARP requests contain the IA:HA of the BOX and the IA of the destination host, and request the HA of the destination host. Upon receiving the HA of the destination host, the BOX stores the IA:HA of the destination host in the table and then transmits an ARP response containing the IA:HA of the destination host to the source host.

Another prior art using ARP to establish communication is disclosed in the paper of SI-DOROVS A. et al.: "SmartARP: merging IP and MAC addressing for low-cost gigabit Ethernet networks" COMPUTER NETWORKS, ELSEVIER SCIENCE PUBLISHERS B. V., AMSTERDAM, NL, vol. 31, no. 21, 10 November 1999, pages 2193-2204. SmartARP is a server program running on only one host in each MAC broadcast domain (or on several hosts for redundancy). It answers all ARP requests about target IP addresses outside the given broadcast domain. In a small and friendly private network, there are four smartARP servers A, B, C, D which run the configuration files. When a host X in workgroup A wants to send an ARP packet to a host Y in workgroup C, the steps of transmission are (X->A), (A -> D), (D -> C), (C -> Y), (Y ->X), and (X <-> Y). The IA:HA of the host X is transmitted to the host Y by means of the configuration files in the servers A, D, and C. Upon receiving the IA:HA of the host X, the host Y generates an ARP response, which is a unicast packet, and thus gets transmitted directly back to the host X in the workgroup A.

For overcoming the mentioned drawbacks of the prior art, a novel wireless adaptor and method for transmitting and receiving a message is provided.

The present invention relates to a bridge device according to claims 5 and 8 and a method for transmitting and receiving a message according to claim 1, for reducing the requests for the transformation between an Internet protocol (IP) address and a hardware address. The present invention provides a novel device and method for transmitting and receiving the message via the wireless adaptor with the function of bridge and repeat in a network having IP address.

According to the aspect of the present invention, the hardware address and the protocol address in the message are recorded in a table in the bridge device, and the transformation between the bridge hardware address and the hardware address in the message is would proceed based thereon. After the transformation, the message is transmitted.

Therefore the present invention is advantageous in that the hardware address at the client end is able to be concealed. Besides, the integration of the local network and the reduction of the number of transmitting the address resolution protocol requests are achieved, so as to enhance the transmission efficiency of the network.

According to a first aspect of the present invention, a method for transmitting and receiving a message is provided. The method includes steps of providing a bridge device having a bridge hardware address and a first end, receiving a first message including a first hardware address, a first protocol address and a second protocol address from the first end, recording the first hardware address and the first protocol address on a table, replacing the first hardware address with the bridge hardware address, transmitting the first message to a second end having a second hardware address corresponding to the second protocol address; transmitting a second message including the first protocol address, the second protocol address, the bridge hardware address, and the second hardware address from the second end to the bridge device, replacing the bridge hardware address with the first hardware address according to the table, and transmitting the second message to the first end.

Preferably, the bridge device is a wireless bridge.

Preferably, the first end is a client end which is one of an Ethernet end and a wireless adaptor.

Preferably, the second end is a server end.

Preferably, the server end is one of an access point (AP) and a second wireless bridge.

Preferably, the server end includes a dynamic host configuration protocol (DHCP) server.

Preferably, the first message is an address resolution protocol (ARP) packet.

According to a second aspect of the present invention, a bridge device having a bridge hardware address is provided. The bridge device includes a first end receiving a first message including a first hardware address, a first protocol address and a second protocol address from a client end, a table recording the first hardware address and the first protocol address, and a second end receiving a second message including a second hardware address corresponding to the second protocol address from a server end.

Preferably, the transformation between the bridge hardware address and the first hardware address is based on the table. When the first message is received by the first end, the first hardware address is replaced by the bridge hardware address, and when the second message is received by the second end, the bridge hardware address is replaced by the first hardware address.

Preferably, the second message further includes the first protocol address, the second protocol address, and the bridge hardware address.

Preferably, the second message having the second hardware address is transmitted from the first end to the client end.

Preferably, the bridge device is a wireless bridge.

Preferably, the client end is one of an Ethernet end and a wireless adaptor.

Preferably, the second end is one of an access point (AP) and a second wireless bridge.

Preferably, the bridge device is a wireless bridge.

According to a third aspect of the present invention, a bridge device having a bridge hardware address is provided. The bridge device includes a first end receiving a first message having a first hardware address and a first protocol address from a client end, a table recording the first message, a second end receiving a second message having a second hardware address from a server end.

Preferably, the transformation between the bridge hardware address and the first hardware address is based on the table. When the first message is received by the first end, the first hardware address is replaced by the bridge hardware address, and when the second message is received by the second end, the bridge hardware address is replaced by the first hardware address.

Preferably, the first message further includes a second protocol address.

According to a fourth aspect of the present invention, a bridge device having a bridge hardware address is provided. The bridge device includes a table for recording a hardware address and a protocol address in a message.

Preferably, the transformation between the bridge hardware address and the hardware address is based on the table.

Preferably, the bridge device is a wireless bridge.

Preferably, the message is from a client end.

Preferably, the message further includes a second protocol address.

The foregoing and other features and advantages of the present invention will be more clearly understood through the following descriptions with reference to the drawings:
Fig. 1 is a diagram showing the linkage for the device and the method according to a preferred embodiment of the present invention;
Fig. 2 is a diagram illustrating the message transformation procedures according to the preferred embodiment of the present invention; and
Fig. 3 is a diagram illustrating the linkage for the device and the method according to another preferred embodiment of the present invention.

### EMBODIMENT OF WIRELESS ADAPTOR AND METHOD FOR TRANSMITTING AND RECEIVING MESSAGE

The present invention will now be described more specifically with reference to the following embodiments. It is to be noted that the following descriptions of preferred embodiments of this invention are presented herein for the aspect of illustration and description only; it is not intended to be exhaustive or to be limited to the precise form disclosed.

For the sake of efficiently enhancing the transmission efficiency of the network and integrating both local network and wireless network, the present invention provides a novel wireless adaptor and a method for transmitting and receiving a message.

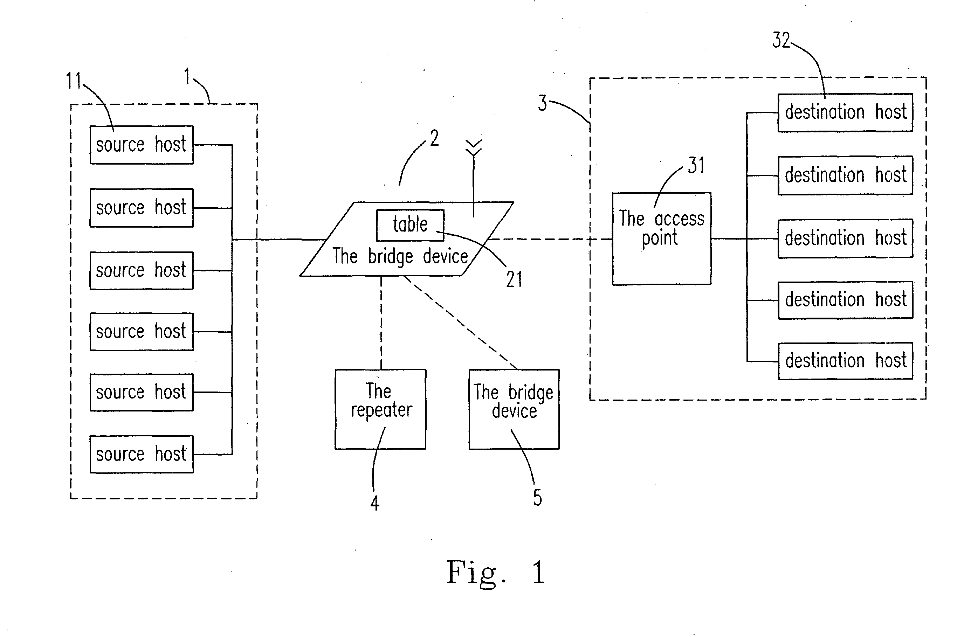

Please refer to Fig. 1, which is a diagram showing the linkage for the device and the method according to a preferred embodiment of the present invention, wherein the bridge device 2 at the client end 1 communicates with the access point 31 in the server end 3 via wireless approach. The client end 1 includes a plurality of source hosts 11, The server end 3 equips with a dynamic host configuration protocol (DHCP) server for providing a dynamic address. Further, the bridge device 2 connects not only to an Ethernet in a hardware approach, but also to a repeater 4 or to another bridge device 5 in a wireless approach. Thus according to the implement for the system and the method of the present invention, the bridge device 2 is used to be a communicator to communicate with the server end 3.

According to a preferred embodiment of the present invention, the bridge device 2 is used to transmit and receive a message. The bridge device 2 has a medium access control (MAC) hardware address thereof, which is assumed to be 00,00,00,00,00,01. In this case, the MAC hardware address is termed as a bridge medium access control (BMAC) address for distinguishing it from another MAC address belonging to another hardware interface. One of the main technical features of the present invention is that the MAC address in the source host 11 is replaced with the BMAC address, and then the message is transmitted and received from the server end 3 via the bridge device 2. The present invention will now be described more specifically with reference to the following embodiments.

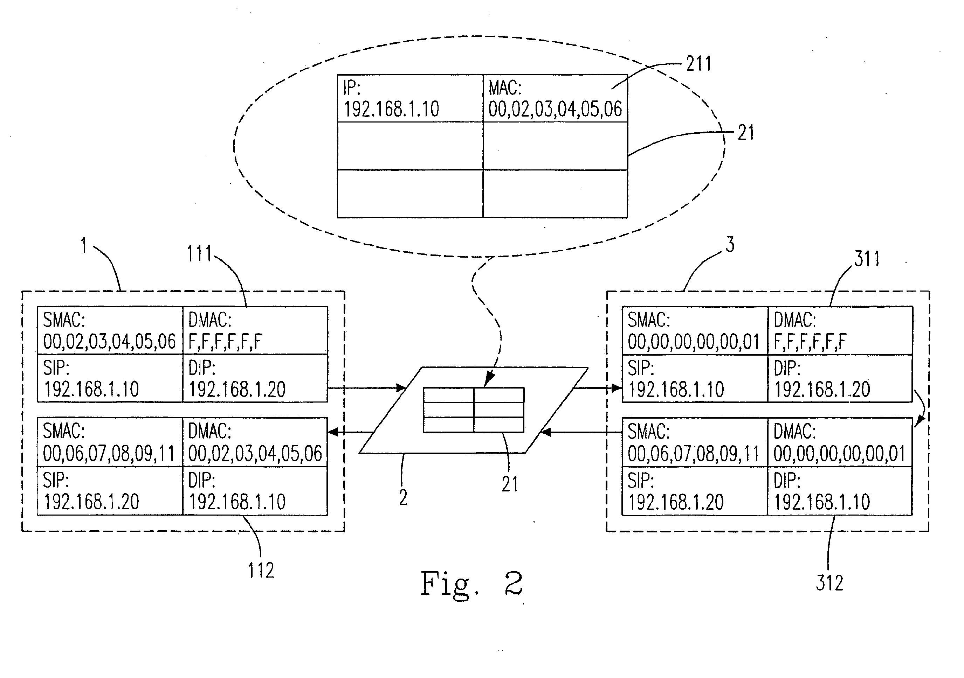

Please refer to Fig. 2, which is a diagram illustrating the message transformation procedures according to the preferred embodiment of the present invention. First, an address resolution protocol (ARP) packet 111 is transmitted from the source host 11 at the client end 1. The ARP packet 111 has a source MAC (SMAC) address, a source IP (SIP) and a destination IP (DIP), and lacks a destination MAC (DMAC). Here arises an example to further explain the detail. It is assumed that the ARP packet 111 contains:

| | |
|---|---|
| SMAC: 00,02,03,04,05,06 | DMAC: F,F,F,F,F,F |
| SIP: I92.168.1.10 | DIP: 192.168.1.20 |

In this case, 00,02,03,04,05,06 is the MAC address of the source host 11, 192.168.1.10 is the IP address of the source host 11, 192.168.1.20 is the IP address of the destination host 32 and F,F,F,F,F,F represents an unknown MAC address for the destination host 32.

Next when the ARP packet 111 is transmitted to the bridge device 2, the MAC 00,02,03,04,05,06 of the source host 11 and the IP 192.168.1.10 of the source host 11 are recorded on the table 21 in the bridge device 2, and are regarded as the message 211. Then the MAC 00,02,03,04,05,06 of the source host 11 is replaced with the BMAC 00,00,00,00,00,01 of the bridge device 2 to be the SMAC and an ARP packet 311 is transformed therefrom. After that the ARP packet 311 is transmitted to an access point 31, wherein the ARP packet 31 contains:

| | |
|---|---|
| SMAC: 00,00,00,00,00,01 | DMAC: F,F,F,F,F,F |
| SIP: 192.168.1.10 | DIP: 192.168.1.20 |

After the ARP packet 31 is transmitted to the access point 31, the DMAC 00,06,07,08,09,11 corresponding to the DIP 192.168.1.20 is provided by the access point 31 or the destination host 32 according to the DIP 192.168.1.20 thereof.

Please refer to Fig. 1 and Fig. 2, a message replied from the access point 31 is received by the bridge device 2, namely an ARP reply 312. The ARP reply 312 includes an IP 192.168.1.10 of the original source host 11, an IP 192.168.1.20 of the destination host 31, the BMAC 00,00,00,00,00,01 of the bridge device 2 and the MAC 00,06,07,08,09,11 of the previous received destination host. The ARP reply 312 contains:

| | |
|---|---|
| SMAC: 00,06,07,08,09,11 | DMAC: 00,00,00,00,00,01 |
| SIP: 192.168.1.20 | DIP: 192.168.1.10 |

The MAC of the source host 11 is known according to the massage 211 recorded on the table 21 because the ARP reply 312 includes the IP 192.168.1.10 of the original source host 11. Further the BMAG 00,00,00,00,00,01 is replaced with the MAC 00,02,03,04,05,06 of the source host 11. Thus the final replaced ARP reply 112 contains:

| | |
|---|---|
| SMAC: 00,06,07,08,09,11 | DMAC: 00,02,03,04,05,06 |
| SIP: 192.168.1.20 | DIP: 192.168.1.10 |

Subsequently, the final replaced ARP reply 112 is transmitted to the client end 1 to obtain the MAC 00,06,07,08,09,11 of the destination host 32.

According to the above preferred embodiment, the present invention discloses a novel method for obtaining a hardware address of the destination host from the server end via utilizing the wireless adaptor equipped with the bridge and repeat function. Furthermore the hardware address of the client end is able to be concealed through the replacement of the hardware address.

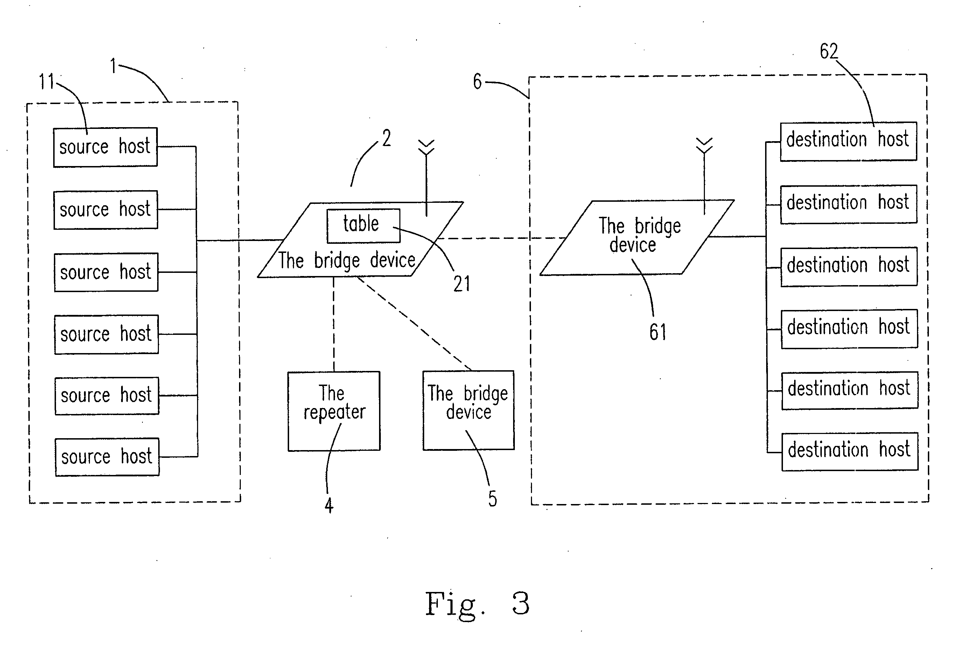

Please refer to Fig. 3, which is a diagram illustrating the linkage for the device and the method according to another preferred embodiment of the present invention. In this case, the bridge device 2 at the server end communicates with the server end 6 in wireless approach as well, wherein the server end 6 includes another bridge device 61 and a plurality of destination hosts 62 and the server end 6 has a dynamic host configuration protocol server as well. Besides, the bridge device 2 connects not only to a local Ethernet but also to a repeater 4 or another bridge device 5. According to the above preferred embodiment, the person skilled in the art can easily understand that the table 21 in the bridge device 2 is able to be applied to record the message in the repeater 4 or in the bridge device 5. In the same sense, the hardware address of the repeater 4 or the bridge device 5 is replaced with the bridge hardware address as well for transmitting and receiving a message. Thus the present invention really has a technique feature thereof substantially.

To sum up the aforementioned, the present invention provides a method for transmitting a message via utilizing the table in the bridge device for recording a hardware address and an IP address in the massage and replacing the hardware address in the message with the bridge hardware address affiliating to the bridge device. Therefore the method not only integrates both local hardware network and wireless network, but also reduces the number of transmitting the ARP requests. Thus the present invention not only bears a novelty and an obviously progressive nature, but also bears a utility.

## Claims

1. A method for transmitting and receiving a message, comprising steps of
providing a bridge device (2, 5, 61) having a bridge hardware address and a first end;
receiving a first message from the first end, wherein the first message comprises a first hardware address, a first protocol address and a second protocol address;
recording the first hardware address and the first protocol address on a table;
generating a second message by only replacing the first hardware address of the first message with the bridge hardware address;
transmitting the second message to a second end having a second hardware address corresponding to the second protocol address;
transmitting a third message from the second end to the bridge device (2, 5, 61), wherein the third message comprises the first protocol address, the second protocol address, the bridge hardware address, and the second hardware address; generating a fourth message by only replacing the bridge hardware address of the third message with the first hardware address according to the table; and
transmitting the fourth message to the first end.

2. The method according to Claim 1, **characterized by**:
providing the bridge device (2, 5, 61) as being a wireless bridge, and
providing the first end as being a client end (1), wherein the client end (1) is one of an Ethernet end and a wireless adaptor.

3. The method according to Claims 1 or 2, **characterized by** providing the second end as being a server end (3, 6), which is one of an access point (31) and a second wireless bridge, or comprises a dynamic host configuration protocol ,DHCP, server.

4. The method according to Claims 1, 2 or 3, **characterized in that** the first message is an address resolution protocol ,ARP, packet (111).

5. A bridge device (2, 5, 61) having a bridge hardware address, comprising:
a first unit configured to receive a first message from a client end (1) and to transmit a second message to the client end (1),
wherein the first message comprises a first hardware address, a first protocol address, and a second protocol address;
a table unit configured to record the first hardware address and the first protocol address, wherein a transformation between the bridge hardware address and the first hardware address is based on a table in the table unit; and
a second unit configured to transmit a third message to a server end (3, 6) and to receive a fourth message from the server end (3, 6), wherein the fourth message has the first protocol address and a second hardware address corresponding to the second protocol address;
wherein when the first message is received by the first unit, the bridge device is further configured to only replace the first hardware address of the first message by the bridge hardware address to generate the third message, and when the fourth message is received by the second unit, the bridge device is further configured to only replace the bridge hardware address of the fourth message by the first hardware address to generate the second message.

6. The device according to Claim 5, **characterized in that**:
the fourth message is **characterized by** comprising the first protocol address, the second protocol address, and the bridge hardware address; and
the second message having the second hardware address is transmitted from the first unit to the client end (1).

7. The device according to Claims 5 or 6, **characterized in that**:
the client end (1) is one of an Ethernet end and a wireless adaptor;
the second end is one of an access point (31) and a second wireless bridge; and
the bridge device (2, 5, 61) is a wireless bridge.

8. A bridge device (2, 5, 61) having a bridge hardware address, comprising:
a first unit configured to receive a first message from a client end (1) and to transmit a second message to the client end (1),
wherein the first message has a first hardware address and a first protocol address;
a table unit configured to record the first message, wherein a transformation between the bridge hardware address and the first hardware address is based on a table in the table unit; and
a second unit configured to transmit a third message to a server end (3, 6) and receiving a fourth message from the server end (3, 6), wherein the fourth message has the first protocol address and a second hardware address;
wherein, when the first message is received by the first unit, the bridge device is further configured to only replace the first hardware address of the first message by the bridge hardware address to generate the third message, and when the fourth message is received by the second unit, the bridge device is further configured to only replace the bridge hardware address of the fourth message by the first hardware address to generate the second message.

9. The device according to Claim 8, **characterized in that** the first message **characterized by** comprising a second protocol address.

## Patentansprüche

1. Verfahren zum Senden und Empfangen einer Nachricht mit den Schritten:
Bereitstellen einer Brückenanordnung (2, 5, 61) mit einer Brückenhardwareadresse und einem ersten Ende;
Empfangen einer ersten Nachricht von dem ersten Ende, wobei die erste Nachricht eine erst Hardwareadresse, eine erste Protokolladresse und eine zweite Protokolladresse umfasst; Aufzeichnen der ersten Hardwareadresse und der ersten Protokolladresse in einer Tabelle;
Erzeugen einer zweiten Nachricht, indem nur die erste Hardwareadresse der ersten Nachricht durch die Brückenhardwareadresse ersetzt wird;
Senden der zweiten Nachricht an ein zweites Ende mit einer der zweiten Protokolladresse entsprechenden zweiten Hardwareadresse;
Senden einer dritten Nachricht von dem zweiten Ende an die Brückenanordnung (2, 5, 61), wobei die dritte Nachricht die erste Protokolladresse, die zweite Protokolladresse, die Brückenhardwareadresse und die zweite Hardwareadresse umfasst;
Erzeugen einer vierten Nachricht, indem nur die Brückenhardwareadresse der dritten Nachricht durch die erste Hardwareadresse gemäß der Tabelle ersetzt wird; und Senden der vierten Nachricht an das erste Ende.

2. Verfahren nach Patentanspruch 1, **gekennzeichnet durch**:
das Bereitstellen der Brückenanordnung (2, 5, 61) als eine drahtlose Brücke, und
das Bereitstellen des ersten Endes als ein Client-Ende (1),
wobei das Client-Ende (1) ein Ethernet-Ende oder ein drahtloser Adapter ist.

3. Verfahren nach Patentanspruch 1 oder 2 **gekennzeichnet durch** das Bereitstellen des zweiten Endes als ein Server-Ende (3, 6), welches ein Zugangspunkt (31) oder eine zweite drahtlose Brücke ist, oder einen Dynamic Host Configuration Protocol (DHCP) -Server umfasst.

4. Verfahren nach Patentanspruch 1, 2 oder 3,
**dadurch gekennzeichnet, dass** die erste Nachricht ein Address Resolution Protocol (ARP) - Paket (111) ist.

5. Brückenanordnung (2, 5, 61) mit einer Brückenhardwareadresse mit:
einer ersten Einheit, die konfiguriert ist, um eine erste Nachricht von einem Client-Ende (1) zu empfangen und eine zweite Nachricht an das Client-Ende (1) zu senden, wobei die erste Nachricht eine erste Hardwareadresse, eine erste Protokolladresse und eine zweite Protokolladresse umfasst; einer Tabelleneinheit, die konfiguriert ist, um die erste Hardwareadresse und die erste Protokolladresse aufzuzeichnen,
wobei eine Transformation zwischen der Brückenhardwareadresse und der ersten Hardwareadresse auf einer Tabelle in der Tabelleneinheit basiert; und
einer zweiten Einheit, die konfiguriert ist, um eine dritte Nachricht an ein Serverende (3, 6) zu senden und eine vierte Nachricht von dem Serverende (3, 6) zu empfangen, wobei die vierte Nachricht die erste Protokolladresse und eine der zweiten Protokolladresse entsprechende zweite Hardwareadresse hat;
wobei, wenn die erste Nachricht von der ersten Einheit empfangen wird, die Brückenanordnung weiterhin konfiguriert ist, um nur die erste Hardwareadresse der ersten Nachricht durch die Brückenhardwareadresse zum Erzeugen der dritten Nachricht zu ersetzen, und wenn die vierte Nachricht von der zweiten Einheit empfangen wird, die Brückenanordnung weiterhin konfiguriert ist, um nur die Brückenhardwareadresse der vierten Nachricht durch die erste Hardwareadresse zum Erzeugen der zweiten Nachricht zu ersetzen.

6. Anordnung nach Patentanspruch 5
**dadurch gekennzeichnet, dass** die vierte Nachricht die erste Protokolladresse, die zweite Protokolladresse und die Brückenhardwareadresse umfasst; und die zweite Nachricht mit der zweiten Hardwareadresse von der ersten Einheit an das Client-Ende (1) übertragen wird.

7. Anordnung nach Patentanspruch 5 oder 6
**dadurch gekennzeichnet, dass** das Client-Ende (1) ein Ethernet-Ende oder ein drahtloser Adapter ist;
das zweite Ende ein Zugangspunkt (31) oder eine zweite drahtlose Brücke ist; und
die Brückenanordnung (2, 5, 61) eine drahtlose Brücke ist.

8. Brückenanordnung (2, 5, 61) mit einer Brückenhardwareadresse mit:
einer ersten Einheit, die konfiguriert ist, um eine erste Nachricht von einem Client-Ende (1) zu empfangen und eine zweite Nachricht an das Client-Ende (1) zu senden, wobei die erste Nachricht eine erste Hardwareadresse und eine erste Protokolladresse hat;
einer Tabelleneinheit, die konfiguriert ist, um die erste Nachricht aufzuzeichnen, wobei eine Transformation zwischen der Brückenhardwareadresse und der ersten Hardwareadresse auf einer Tabelle in der Tabelleneinheit basiert; und
einer zweiten Einheit, die konfiguriert ist, um eine dritte Nachricht an ein Serverende (3, 6) zu senden und eine vierte Nachricht von dem Serverende (3, 6) zu empfangen, wobei die vierte Nachricht die erste Protokolladresse und eine zweite Hardwareadresse hat;
wobei, wenn die erste Nachricht von der ersten Einheit empfangen wird, die Brückenanordnung weiterhin konfiguriert ist, um nur die erste Hardwareadresse der ersten Nachricht durch die Brückenhardwareadresse zum Erzeugen der dritten Nachricht zu ersetzen, und, wenn die vierte Nachricht von der zweiten Einheit empfangen wird, die Brückenanordnung weiterhin konfiguriert ist, um die Brückenhardwareadresse der vierten Nachricht durch die erste Hardwareadresse zum Erzeugen der zweiten Nachricht zu ersetzen.

9. Anordnung nach Patentanspruch 8,
**dadurch gekennzeichnet, dass** die erste Nachricht eine zweite Protokolladresse umfasst.

## Revendications

1. Procédé pour transmettre et recevoir un message, comprenant les étapes suivantes :
utilisation d'un dispositif (2, 5, 61) formant pont ayant une adresse matérielle de pont et une première extrémité ;
réception d'un premier message de la première extrémité, le premier message comprenant une première adresse matérielle, une première adresse de protocole, et une deuxième adresse de protocole ;
enregistrement de la première adresse matérielle et de la première adresse de protocole dans une table ;
production d'un deuxième message en ne remplaçant que la première adresse matérielle du premier message par l'adresse matérielle du pont ;
transmission du deuxième message à une deuxième extrémité ayant une deuxième adresse matérielle correspondant à la deuxième adresse de protocole ;
transmission d'un troisième message de la deuxième extrémité au dispositif (2, 5, 61) formant pont, le troisième message comprenant la première adresse de protocole, la deuxième adresse de protocole, l'adresse matérielle du pont et la deuxième adresse matérielle ;
production d'un quatrième message en ne remplaçant l'adresse matérielle du pont du troisième message que par la première adresse matérielle conformément à la table ; et
transmission du quatrième message à la première extrémité.

2. Procédé suivant la revendication 1, **caractérisé par** :
l'utilisation du dispositif (2, 5, 61) formant pont en tant que pont sans fil, et
l'utilisation de la première extrémité en tant qu'extrémité cliente (1), l'extrémité cliente (1) étant l'un d'une extrémité Ethernet et d'un adaptateur sans fil.

3. Procédé suivant la revendication 1 ou 2, **caractérisé par** l'utilisation de la deuxième extrémité en tant qu'extrémité (3, 6) formant serveur, qui est l'un d'un point (31) d'accès et d'un deuxième pont sans fil, ou qui comprend un serveur de protocole de configuration dynamique d'hôte, ou DHCP.

4. Procédé suivant la revendication 1, 2 ou 3, **caractérisé en ce que** le premier message est un paquet (111) de protocole de résolution d'adresse, ou ARP.

5. Dispositif (2, 5, 61) formant pont ayant une adresse matérielle de pont, comprenant :
une première unité configurée pour recevoir un premier message d'une extrémité cliente (1) et pour transmettre un deuxième message à l'extrémité cliente (1), dans lequel le premier message comprend une première adresse matérielle, une première adresse de protocole, et une deuxième adresse de protocole ;
une unité de table configurée pour enregistrer la première adresse matérielle et la première adresse de protocole, une transformation entre l'adresse matérielle du pont et la première adresse matérielle étant basée sur table contenue dans l'unité de table ; et
une deuxième unité configurée pour transmettre un troisième message à une extrémité (3, 6) formant serveur et pour recevoir un quatrième message de l'extrémité (3, 6) formant serveur, le quatrième message ayant la première adresse de protocole et une deuxième adresse matérielle correspondant à la deuxième adresse de protocole ;
**caractérisé en ce que**, lorsque le premier message est reçu par la première unité, le dispositif formant pont est en outre configuré pour ne remplacer la première adresse matérielle du premier message que par l'adresse matérielle du pont afin de produire le troisième message, et **en ce que**, lorsque le quatrième message est reçu par la deuxième unité, le dispositif formant pont est en outre configuré pour ne remplacer l'adresse matérielle du pont du quatrième message que par la première adresse matérielle pour produire le deuxième message.

6. Dispositif suivant la revendication 5, **caractérisé en ce que** :
le quatrième message est **caractérisé par** le fait de comprendre la première adresse de protocole, la deuxième adresse de protocole et l'adresse matérielle du pont ; et
le deuxième message ayant la deuxième adresse matérielle est transmis de la première unité à l'extrémité cliente (1).

7. Dispositif suivant la revendication 5 ou 6, **caractérisé en ce que** :
l'extrémité cliente (1) est l'un d'une extrémité Ethernet et d'un adaptateur sans fil ;
la deuxième extrémité est l'un d'un point (31) d'accès et d'un deuxième pont sans fil ; et
le dispositif (2, 5, 61) formant pont est un pont sans fil.

8. Dispositif (2, 5, 61) formant pont ayant une adresse matérielle de pont, comprenant :
une première unité configurée pour recevoir un premier message d'une extrémité (1) cliente et pour transmettre un deuxième message à l'extrémité (1) cliente,
le premier message ayant une première adresse matérielle et une première adresse de protocole ;
une unité formant table configurée pour enregistrer le premier message, une transformation entre l'adresse matérielle du pont et la première adresse matérielle étant basée sur une table contenue dans l'unité de table ; et
une deuxième unité configurée pour transmettre un troisième message à une extrémité (3, 6) formant serveur et recevoir un quatrième message de l'extrémité (3, 6) formant serveur, la quatrième unité ayant la première adresse de protocole et une deuxième adresse matérielle ;
**caractérisé en ce que**, lorsque le premier message est reçu par la première unité, le dispositif formant pont est en outre configuré pour ne remplacer la première adresse matérielle du premier message que par l'adresse matérielle du pont afin de produire le troisième message, et **en ce que**, lorsque le quatrième message est reçu par la deuxième unité, le dispositif formant pont est en outre configuré pour ne remplacer l'adresse matérielle du pont du quatrième message que par la première adresse matérielle afin de produire le deuxième message.

9. Dispositif suivant la revendication 8, **caractérisé en ce que** le premier message est **caractérisé par** le fait de comprendre une deuxième de protocole.
